# EUROPÄISCHE PATENTANMELDUNG

(11) **EP 2 727 674 A1**
(43) Veröffentlichungstag der Anmeldung: **07.05.2014**
(21) Anmeldenummer: 13165587.0
(22) Anmeldetag: 26.04.2013
(51) Int. Cl.: B23D 47/12

(54) **Sägeaggregat**

(30) Priorität: 30.10.2012 EP 12190680
(71) Anmelder: HOLZ-HER GmbH, 72622 Nürtingen (DE)
(72) Erfinder: Hackl, Franz, 4591 Molln (AT); Strasser, Rainer, 4571 Steyrling (AT)
(74) Vertreter: Hoeger, Stellrecht & Partner Patentanwälte

(57) **Zusammenfassung**

Die Erfindung betrifft ein Sägeaggregat (20; 100) für eine Sägemaschine (10) zum Aufteilen plattenförmiger Werkstücke. Das Sägeaggregat (20; 100) umfasst einen unterhalb eines Auflagetisches (14) der Sägemaschine (10) in einer Bearbeitungsrichtung (22) horizontal verfahrbaren Transportwagen (36), mindestens einen am Transportwagen (36) zwischen einer angehobenen Stellung und einer abgesenkten Stellung hin und her bewegbaren Schlitten (46; 110), an dem eine drehfest mit einem Sägeblatt (34) verbindbare Sägewelle (48) drehbar gelagert ist, sowie eine am Transportwagen (36) ortsfest angeordnete Antriebswelle (58), die von einem ortsfest am Transportwagen (36) gehaltenen Sägemotor (60) drehend antreibbar ist, wobei die Antriebswelle (58) über ein endloses Zugmittel (56; 126) mit der Sägewelle (48) gekoppelt ist und das Zugmittel (56; 126) über mindestens ein erstes Umlenkelement (66; 106) geführt ist zum Ausgleich einer durch Verstellung des Schlittens (46; 110) hervorgerufenen Änderung des Achsabstands zwischen der Antriebswelle (58) und der Sägewelle (48), und wobei das erste Umlenkelement (66; 106) relativ zur Antriebswelle (58) und relativ zur Sägewelle (48) bewegbar ist. Um das Sägeaggregat (20; 100) derart weiterzubilden, dass es eine geringere Bauhöhe aufweist, wird vorgeschlagen, dass die Bewegung des ersten Umlenkelements (66; 106) relativ zur Sägewelle (48) im Winkel zu einer in der angehobenen Stellung des Schlittens (46; 110) die Drehachse (74) der Antriebswelle (58) mit der Drehachse (50) der Sägewelle (48) verbindenden Verbindungslinie (72) ausgerichtet ist.

## Beschreibung

Die Erfindung betrifft ein Sägeaggregat für eine Sägemaschine zum Aufteilen plattenförmiger Werkstücke, umfassend einen unterhalb eines Auflagetisches der Sägemaschine in einer Bearbeitungsrichtung horizontal verfahrbaren Transportwagen, mindestens einen am Transportwagen zwischen einer angehobenen Stellung und einer abgesenkten Stellung hin und her bewegbaren Schlitten, an dem eine drehfest mit einem Sägeblatt verbindbare Sägewelle drehbar gelagert ist, sowie eine am Transportwagen ortsfest angeordnete Antriebswelle, die von einem ortsfest am Transportwagen gehaltenen Sägemotor drehend antreibbar ist, wobei die Antriebswelle über ein endloses Zugmittel mit der Sägewelle gekoppelt ist und das Zugmittel über mindestens ein erstes Umlenkelement geführt ist zum Ausgleich einer durch Verstellung des Schlittens hervorgerufenen Änderung des Achsabstandes zwischen der Antriebswelle und der Sägewelle, und wobei das erste Umlenkelement relativ zur Antriebswelle und relativ zur Sägewelle bewegbar ist.

Derartige Sägeaggregate kommen beispielsweise bei Druckbalkensägen zum Einsatz. Druckbalkensägen weisen einen Auflagetisch auf, auf dem ein aufzuteilendes plattenförmiges Werkstück positioniert werden kann. Das Sägeaggregat ist unterhalb des Auflagetisches in einer Bearbeitungsrichtung horizontal verfahrbar. Ein am Transportwagen gehaltener Schlitten kann zwischen einer angehobenen und einer abgesenkten Stellung hin und her bewegt werden. Am Schlitten ist eine Sägewelle drehbar gelagert, die über ein Zugmittel von einer Antriebswelle mit Hilfe eines Sägemotors in Drehung versetzt werden kann. Mit der Sägewelle kann ein Sägeblatt drehfest verbunden werden, so dass mittels des Sägeblattes das Werkstück aufgeteilt werden kann. Hierzu nimmt der Schlitten eine, je nach Schnitthöhe erforderliche, angehobene Stellung ein. In dieser Stellung ragt das Sägeblatt über den Auflagetisch hervor und beim Verfahren des Transportwagens in Bearbeitungsrichtung durchdringt das Sägeblatt das Werkstück. Anschließend wird der Schlitten in seine abgesenkte Stellung bewegt. In dieser Stellung nimmt das Sägeblatt eine Position unterhalb des Auflagetisches ein, so dass es bei einer Bewegung des Transportwagens in dessen Ausgangslage aus dem Gefahrenbereich ist.

In der EP 1 362 656 B1 ist ein Sägeaggregat beschrieben, bei dem der Sägemotor am Schlitten gehalten ist und von diesem zusammen mit der Sägewelle angehoben und abgesenkt wird. Dies erfordert allerdings einen erheblichen Energieaufwand, da der Sägemotor in der Regel ein beträchtliches Gewicht aufweist.

Um den Energieaufwand beim Anheben und Absenken des Schlittens zu vermindern, wird in der DE 195 32 726 B4 vorgeschlagen, den Sägemotor ortsfest am Transportwagen zu positionieren und über einen Riementrieb mit der am Schlitten drehbar gelagerten Sägewelle zu koppeln. Die Antriebswelle ist fluchtend zur Motorwelle ausgerichtet und trägt drehfest eine Riemenscheibe, um die Ω-förmig ein Antriebsriemen herum geführt ist, der unter Einsatz von drei frei drehbaren Umlenkscheiben zu einer drehfest an der Sägewelle gehaltenen Riemenscheibe geführt ist. Eine der Umlenkscheiben ist am Schlitten gelagert und die restlichen beiden Umlenkscheiben sind stationär am Transportwagen gelagert. Dies erlaubt eine Umlenkung des Antriebsriemens dergestalt, dass bei einem Anheben und Absenken des Schlittens die damit verbundene Änderung des Achsabstands zwischen der Antriebswelle und der Sägewelle keine Änderung der Spannung des Antriebsriemens zur Folge hat.

Aus der EP 1 192 438 A2 ist ein Sägeaggregat bekannt, die dem eine erste Riemenscheibe drehfest an der Antriebswelle und eine zweite Riemenscheibe drehfest an der Sägewelle gehalten ist. Zusätzlich kommen zwei Umlenkscheiben zum Einsatz. Eine erste Umlenkscheibe ist ortsfest am Transportwagen und eine zweite Umlenkscheibe ist verschiebbar am Schlitten gelagert. Die Antriebswelle ist in vertikaler Richtung unterhalb der Sägewelle angeordnet. Bewegt sich der Schlitten aus einer angehobenen Stellung in eine abgesenkte Stellung, so verringert sich der Achsabstand zwischen der Antriebswelle und der Sägewelle. Gleichzeitig wird mit dem Schlitten auch eine der beiden Umlenkscheiben abgesenkt. Eine Verkürzung des Achsabstands zwischen der Antriebswelle und der Sägewelle wird durch eine gleich große Vergrößerung des Achsabstandes zwischen den beiden Umlenkscheiben ausgeglichen, so dass eine Bewegung des Schlittens keine Änderung der Spannung des Antriebsriemens zur Folge hat. Die gegenläufige Bewegung der Umlenkscheiben hat zur Folge, dass das aus der EP 1 992 438 A2 bekannte Sägeaggregat eine beachtliche Bauhöhe aufweist. Dies bedingt einen beachtlichen Montageraum beim Einbau des bekannten Sägeaggregates in eine Sägemaschine.

Aufgabe der vorliegenden Erfindung ist es, ein Sägeaggregat der gattungsgemäßen Art derart weiterzubilden, dass es eine geringere Bauhöhe aufweist.

Diese Aufgabe wird bei einem Sägeaggregat der eingangs genannten Art Erfindung dadurch gelöst, dass die Bewegung des ersten Umlenkelements relativ zur Sägewelle im Winkel zu einer in der angehobenen Stellung des Transportschlittens die Drehachse der Antriebswelle mit der Drehachse der Sägewelle verbindenden Verbindungslinie ausgerichtet ist.

Beim erfindungsgemäßen Sägeaggregat führt das erste Umlenkelement beim Anheben und Absenken des Schlittens eine Ausgleichsbewegung aus, die eine gleichbleibende Spannung des Zugmittels sicherstellt trotz der Änderung des Achsabstandes zwischen der Antriebswelle und der Sägewelle. Die Ausgleichsbewegung des ersten Umlenkelements relativ zur Sägewelle ist schräg oder senkrecht zu einer gedachten Verbindungslinie ausgerichtet, die die Drehachse der Antriebswelle mit der Drehachse der Sägewelle verbindet, wenn der Schlitten seine angehobene Stellung eingenommen hat. Eine derartige Ausrichtung der Ausgleichsbewegung des ersten Umlenkelements erlaubt es, das erfindungsgemäße Sägeaggregat mit verhältnismäßig geringer Bauhöhe auszugestalten. Das erfindungsgemäße Sägeaggregat erfordert daher beim Einbauen in eine Sägemaschine einen verhältnismäßig geringen Montageraum.

Die Ausgleichsbewegung des ersten Umlenkelements kann entlang einer Ausgleichskurve erfolgen. Beispielsweise kann vorgesehen sein, dass das erste Umlenkelement beim Bewegen des Schlittens kreisbogenförmig bewegbar ist.

Eine konstruktiv besonders einfache Ausgestaltung des erfindungsgemäßen Sägeaggregats umfasst ein erstes Umlenkelement, das linear bewegbar ist.

Bevorzugt ist das erste Umlenkelement an einer Linearführung verschiebbar gelagert.

Günstig ist es, wenn das erste Umlenkelement horizontal und/oder vertikal bewegbar ist.

Eine besonders kompakte Ausgestaltung wird bei einer bevorzugten Ausführungsform der Erfindung dadurch erzielt, dass das erste Umlenkelement beim Übergang des Schlittens von seiner abgesenkten Stellung in seine angehobene Stellung reziprozierend bewegbar ist.

Von Vorteil ist es, wenn das erste Umlenkelement in Bearbeitungsrichtung des Schlittens versetzt zur Sägewelle und bezogen auf die Vertikale im Bereich zwischen der anhobenen und der abgesenkten Stellung der Sägewelle angeordnet ist. Dies ermöglicht eine konstruktiv besonders einfache und kompakte Ausgestaltung des Sägeaggregats.

Günstigerweise ist das erste Umlenkelement in Bearbeitungsrichtung des Schlittens zwischen der Sägewelle und der Antriebswelle angeordnet.

Das erste Umlenkelement ist bei einer vorteilhaften Ausführungsform des erfindungsgemäßen Sägeaggregats in Abhängigkeit von der vom Zugmittel auf das erste Umlenkelement ausgeübten Zugkraft bewegbar. Die vom Zugmittel auf das erste Umlenkelement ausgeübte Zugkraft dient bei einer derartigen Ausgestaltung als Steuergröße für die Bewegung des ersten Umlenkelements. Nimmt der Schlitten seine angehobene Stellung ein, so übt das Zugmittel eine vorgebbare Zugkraft auf das erste Umlenkelement aus. Wird der Schlitten in seine abgesenkte Stellung bewegt, so führt dies zu einer Änderung der auf das erste Umlenkelement einwirkenden Zugkraft aufgrund des sich ändernden Abstands zwischen der Sägewelle und der Antriebswelle. Die sich ändernde Zugkraft hat dann zur Folge, dass das erste Umlenkelement eine Ausgleichsbewegung ausführt dergestalt, dass einer Änderung der Zugkraft entgegengewirkt wird. Dies bewirkt, dass sich die Spannung des Zugmittels bei einer Bewegung des Schlittens praktisch nicht ändert.

Alternativ oder ergänzend kann vorgesehen sein, dass das erste Umlenkelement in Abhängigkeit von der Position der Sägewelle bewegbar ist. Je nachdem, welche Position die Sägewelle relativ zum Transportwagen einnimmt, kann das erste Umlenkelement eine entsprechende Position einnehmen. Die Position der Sägewelle kann mittels einer Sensoranordnung erfasst werden und die Bewegung des Umlenkelements kann beispielsweise mit Hilfe eines in Abhängigkeit von Sensordaten der Sensoranordnung gesteuerten Stellantriebs erfolgen. So kann beispielsweise vorgesehen sein, dass das erste Umlenkelement mittels eines Stellmotors bewegbar ist, wobei der Stellmotor mit einer Steuereinrichtung verbunden ist, an die die Sensoranordnung angeschlossen ist.

Bei einer bevorzugten Ausgestaltung der Erfindung weist das Sägeaggregat eine Zugmittelspanneinrichtung auf mit einem Basisteil und einem relativ zum Basisteil bewegbaren Verstellteil, wobei das erste Umlenkelement am Verstellteil drehbar gelagert ist und das Verstellteil bei einer Bewegung des Schlittens mit einer Stellkraft beaufschlagbar ist.

Mittels der Zugmittelspanneinrichtung kann bei einer Bewegung des Schlittens und damit bei einer Änderung des Achsabstands zwischen der Sägewelle und der Antriebswelle eine gleichbleibende Spannung des Zugmittels sichergestellt werden, indem ein Verstellteil, an dem das erste Umlenkelement drehbar gelagert ist, relativ zu einem Basisteil derart bewegt wird, dass das Verstellteil mit einer gleichbleibenden Stellkraft beaufschlagt wird.

Die Beaufschlagung des Verstellglieds mit der Stellkraft kann beispielsweise unter Einsatz eines Zugmittelspannelements erfolgen, das in Kraftflussrichtung zwischen dem Basisteil und dem Verstellteil angeordnet ist.

Günstig ist es, wenn das Basisteil der Zugmittelspanneinrichtung ortsfest am Transportwagen festgelegt ist.

Alternativ kann vorgesehen sein, dass das Basisteil am Transportwagen beweglich, insbesondere verschwenkbar gelagert ist.

Das Basisteil weist bevorzugt mindestens ein Führungselement für das Verstellteil auf.

Die Zugmittelspanneinrichtung weist bei einer vorteilhaften Ausgestaltung der Erfindung ein Federelement auf. Das Federelement bildet ein Zugmittelspannelement, das es in konstruktiv besonders einfacher Weise ermöglicht, bei der Bewegung des Schlittens auftretende Änderungen der Zugspannung des Zugmittels zu kompensieren, indem das erste Umlenkelement zusammen mit dem Verstellteil vom Federelement relativ zum Basisteil bewegt wird.

Alternativ oder ergänzend kann vorgesehen sein, dass die Zugmittelspanneinrichtung elektromotorisch, pneumatisch oder hydraulisch steuerbar ist. Beispielsweise kann die Zugmittelspanneinrichtung einen Elektromotor aufweisen oder ein Kolben-Zylinderaggregat, das pneumatisch oder hydraulisch beaufschlagbar ist.

Bei einer vorteilhaften Ausgestaltung der Erfindung umfasst das Basisteil einen Druckluftzylinder, unter dessen Wirkung das Verstellteil mit einer Druckkraft beaufschlagbar ist.

Das Verstellteil ist günstigerweise am Schlitten beweglich gelagert.

Bevorzugt ist das Verstellteil an einer Führungseinrichtung, beispielsweise einem Führungsprofil, verschiebbar gelagert. Die Führungseinrichtung ist bei einer vorteilhaften Ausführungsform am Transportwagen festgelegt.

Von besonderem Vorteil ist es, wenn die Führungseinrichtung am Schlitten gehalten ist.

Eine besonders geringe Bauhöhe wird bei einer vorteilhaften Ausgestaltung des erfindungsgemäßen Sägeaggregats dadurch erzielt, dass die Antriebswelle in Bearbeitungsrichtung des Transportwagens versetzt zur Sägewelle angeordnet ist.

Die Antriebswelle ist günstigerweise fluchtend zur Motorwelle des Sägemotors angeordnet. Insbesondere kann vorgesehen sein, dass die Antriebswelle formschlüssig oder stoffschlüssig mit der Motorwelle verbunden ist. Zusätzliche Elemente zur Kopplung der Motorwelle mit der Antriebswelle können dadurch entfallen.

Bei einer vorteilhaften Ausführungsform weist das Sägeaggregat zusätzlich zu dem relativ zur Sägewelle und zur Antriebswelle bewegbaren ersten Umlenkelement ein ortsfest am Transportwagen oder am Schlitten gelagertes zweites Umlenkelement auf. Insbesondere ein ortsfest am Schlitten gelagertes zweites Umlenkelement hat sich als besonders vorteilhaft erwiesen.

Ausgehend von der Antriebswelle ist günstigerweise ein erstes Trum des Zugmittels über oder unter das erste Umlenkelement und ein zweites Trum des Zugmittels über oder unter das zweite Umlenkelement geführt.

Das erste Trum ist günstigerweise auf der dem zweiten Umlenkelement abgewandten Seite oder der dem zweiten Umlenkelement zugewandten Seite des ersten Umlenkelements um das erste Umlenkelement herum geführt.

Günstig ist es, wenn das zweite Trum auf der dem ersten Umlenkelement zugewandten Seite oder der dem ersten Umlenkelement abgewandten Seite des zweiten Umlenkelements um das zweite Umlenkelement herum geführt ist.

Von besonderem Vorteil ist es, wenn der Umschlingungswinkel des Zugmittels um das erste Umlenkelement kleiner als 180° ist. Ein Umschlingungswinkel von weniger als 180° hat zur Folge, dass die zur Sicherstellung einer gleichbleibenden Zugmittelspannung erforderliche Ausgleichsbewegung des ersten Umlenkelements kleiner ist als die Hubbewegung des Schlittens. Dies ermöglicht eine besonders kompakte Ausgestaltung des erfindungsgemäßen Sägeaggregats.

Die nachfolgende Beschreibung zweier vorteilhafter Ausführungsformen der Erfindung dient im Zusammenhang mit der Zeichnung der näheren Erläuterung. Es zeigen:
- Figur 1:: eine perspektivische Darstellung einer Sägemaschine mit einem erfindungsgemäßen Sägeaggregat;
- Figur 2:: eine perspektivische Darstellung einer ersten vorteilhaften Ausführungsform des Sägeaggregats aus Figur 1;
- Figur 3:: eine Seitenansicht des Sägeaggregats aus Figur 2, wobei ein Schlitten des Sägeaggregats seine abgesenkte Stellung einnimmt;
- Figur 4:: eine Seitenansicht des Sägeaggregats aus Figur 2, wobei der Schlitten eine Position zwischen seiner angehobenen und seiner abgesenkten Stellung einnimmt;
- Figur 5:: eine Seitenansicht des Sägeaggregats aus Figur 2, wobei der Schlitten seine angehobene Stellung einnimmt;
- Figur 6:: eine perspektivische Darstellung einer zweiten vorteilhaften Ausführungsform des Sägeaggregats aus Figur 1;
- Figur 7:: eine Seitenansicht des Sägeaggregats aus Figur 6, wobei ein Schlitten des Sägeaggregats seine abgesenkte Stellung einnimmt, und
- Figur 8:: eine Seitenansicht des Sägeaggregats aus Figur 6, wobei der Schlitten des Sägeaggregats seine angehobene Stellung einnimmt.

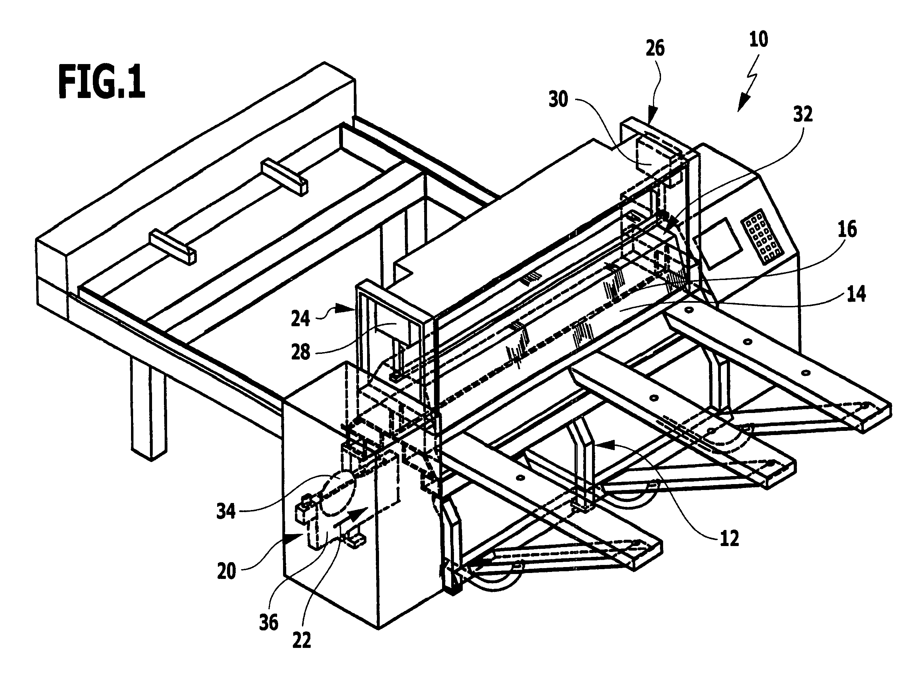

In Figur 1 ist schematisch eine Sägemaschine in Form einer Druckbalkensäge 10 dargestellt mit einem Maschinengestell 12, das einen Auflagetisch 14 für ein in der Zeichnung zur Erzielung einer besseren Übersicht nicht dargestelltes plattenförmiges Werkstück ausbildet. Der Auflagetisch 14 weist einen Sägespalt 16 auf und unterhalb des Auflagetisches 14 ist ein Sägeaggregat 20 entlang einer Bearbeitungsrichtung 22 linear hin und her verfahrbar am Maschinengestell 12 gehalten.

Das Maschinengestell 12 trägt an einander gegenüberliegenden Stirnseiten jeweils einen Druckbalkenturm 24, 26, der eine Führungsanordnung 28 bzw. 30 aufnimmt. Mittels der Führungsanordnungen 28, 30 ist an den Druckbalkentürmen 24, 26 eine Niederhaltevorrichtung in Form eines Druckbalkens 32 senkrecht zur Auflageebene des Auflagetisches 14 verstellbar gehalten. Der Druckbalken 32 weist in üblicher Weise ein ungefähr C-förmiges Profil auf mit einer dem Sägespalt 16 zugewandten schlitzförmigen Öffnung, in die beim Aufteilen des Werkstückes ein Sägeblatt 34 des Sägeaggregats 22 eintreten kann. Der Druckbalken 22 kann mittels an sich bekannter und deshalb in der Zeichnung zur Erzielung einer besseren Übersicht nicht dargestellter Kolben-Zylinderaggregate angehoben und abgesenkt werden.

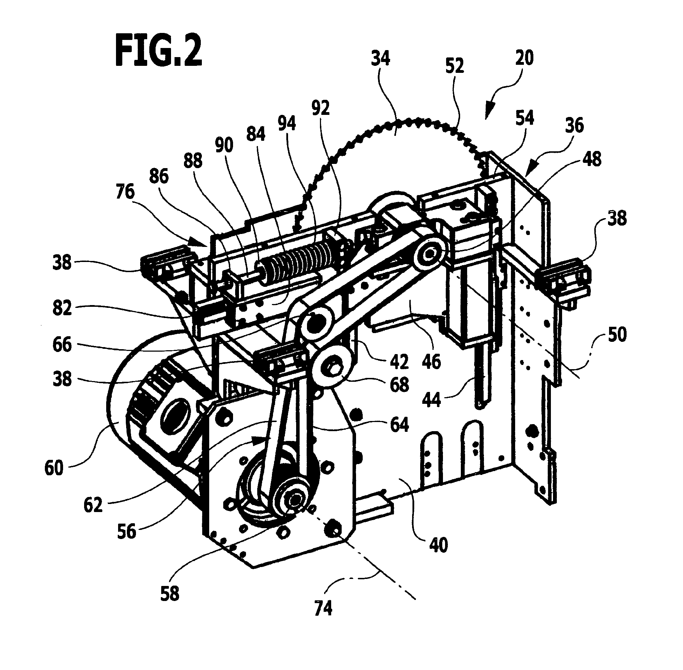

Eine erste vorteilhafte Ausführungsform eines erfindungsgemäßen Sägeaggregats 20 ist in den Figuren 2 bis 5 schematisch dargestellt. Es umfasst einen Transportwagen 36, der mittels Gleitschuhen 38 an unterhalb des Auflagetisches 14 am Maschinengestell 12 festgelegten Profilschienen in Bearbeitungsrichtung 22 bewegbar ist. Zum Bewegen des Sägeaggregats 20 in Bearbeitungsrichtung 22 kommt ein in der Zeichnung nicht dargestellter, an sich bekannter Fahrantrieb in Form eines Elektromotors zum Einsatz. Derartige Fahrantriebe sind dem Fachmann an sich bekannt und bedürfen daher vorliegend keiner näheren Erläuterung.

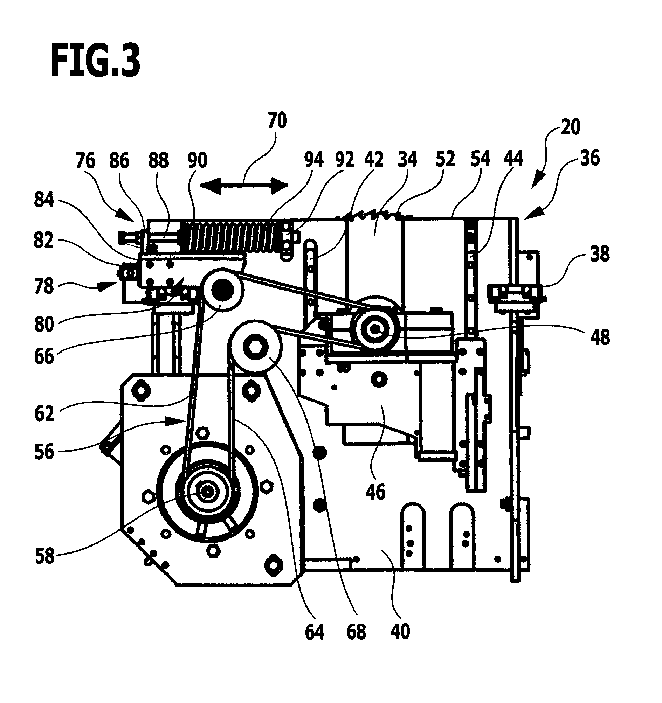

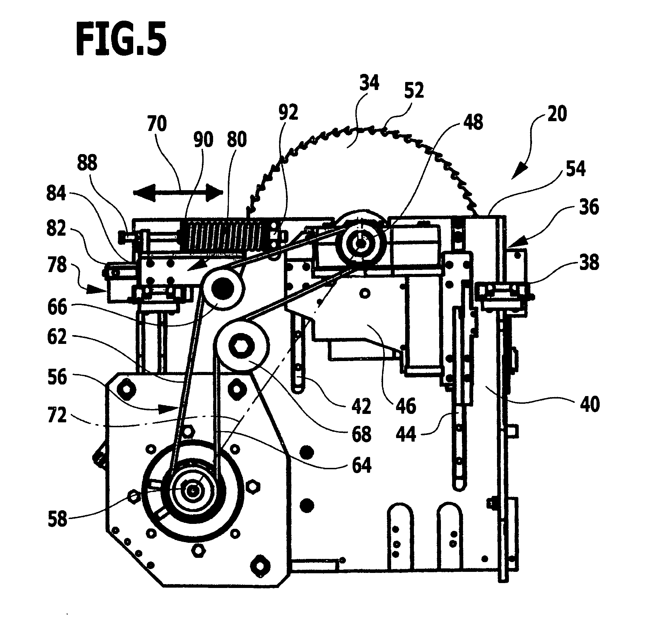

Der Transportwagen 38 umfasst eine Transportplatte 40, an der mittels einer ersten Führungsschiene 42 und einer zweiten Führungsschiene 44 ein Schlitten 46 in vertikaler Richtung verschiebbar gelagert ist. Der Schlitten 46 kann mittels einer an sich bekannten und deshalb zur Erzielung einer besseren Übersicht in der Zeichnung ebenfalls nicht dargestellten Hubeinrichtung zwischen einer in Figur 3 dargestellten abgesenkten Stellung und einer in Figur 5 dargestellten angehobenen Stellung hin und her bewegt werden.

Am Schlitten 46 ist eine Sägewelle 48 um eine senkrecht zur Bearbeitungsrichtung 22 und senkrecht zur Hubbewegung des Schlittens 46 ausgerichteten Drehachse 50 drehbar gelagert. Das Sägeblatt 34 ist mit der Sägewelle 48 drehfest verbindbar. Nimmt der Schlitten 46 seine in Figur 3 dargestellte abgesenkte Stellung ein, so reicht der mit Sägezähnen 52 versehene Außenumfang des Sägeblattes 34 in etwa eine obere Stirnkante 54 der Transportplatte 40. Nimmt der Schlitten 46 seine in Figur 5 dargestellte angehobene Stellung ein, so steht das Sägeblatt 34 deutlich über die obere Stirnkante 54 der Transportplatte 40 hervor.

Soll ein auf dem Auflagetisch 14 positioniertes plattenförmiges Werkstück aufgeteilt werden, so kann das Sägeaggregat 20 zunächst eine in Figur 1 dargestellte Ausgangsstellung an einer Stirnseite des Auflagetisches 14 einnehmen und der Schlitten 46 kann in seine angehobene Stellung bewegt werden, in der das Sägeblatt 34 den Sägespalt des Auflagetisches 14 durchgreift und in die schlitzförmige Öffnung des Druckbalkens 30 eintaucht. Durch Verfahren des Sägeaggregats 20 in Bearbeitungsrichtung 22 kann dann das Werkstück aufgeteilt werden. Anschließend kann der Schlitten 46 in seine abgesenkte Stellung bewegt werden, so dass dann das Sägeaggregat 20 unterhalb des Auflagetisches 14 wieder in seine Ausgangsstellung zurückbewegt werden kann.

Der Drehantrieb der Sägewelle 48 erfolgt mit Hilfe eines in sich geschlossenen Zugmittels, das im dargestellten Ausführungsbeispiel in Form eines Antriebsriemens 56 ausgebildet ist, über den die Sägewelle 48 mit einer ortsfest am Transportwagen 36 angeordneten Antriebswelle 58 gekoppelt ist. Die Antriebswelle 58 ist fluchtend zur Motorwelle eines Sägemotors 60 ausgerichtet, der die Antriebswelle 58 in Drehung versetzt und ortsfest am Transportwagen 38 gehalten ist.

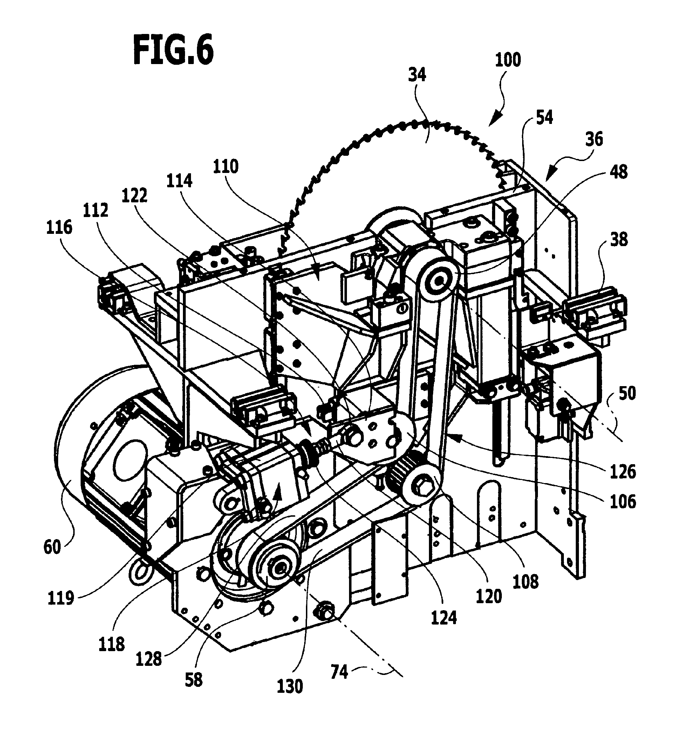

Der Antriebsriemen 56 weist ein ersten Trum 62 und ein zweites Trum 64 auf. Ausgehend von der Antriebswelle 58 ist das erste Trum 62 um ein erstes Umlenkelement in Form einer ersten Umlenkscheibe 66 herum geführt, und das zweite Trum 64 ist ausgehend von der Antriebswelle 58 über ein zweites Umlenkelement in Form einer zweiten Umlenkscheibe 68 herum geführt. Die erste Umlenkscheibe 66 ist im Gegensatz zur zweiten Umlenkscheibe 68 relativ zur Sägewelle 48 und relativ zur Antriebswelle 58 bewegbar. Dies ermöglicht es, bei einer Bewegung des Schlittens 46 und damit der Sägewelle 48 eine gleich bleibende Riemenspannung im Antriebsriemen 56 aufrechtzuerhalten trotz der Änderung des Abstands, den die Sägewelle 48 zur Antriebswelle 58 einnimmt. Zur Sicherstellung einer gleich bleibenden Riemenspannung kann die erste Umlenkscheibe 66 eine Ausgleichsbewegung durchführen, die in den Figuren 3, 4 und 5 durch den Doppelpfeil 70 veranschaulicht ist. Die Ausgleichsbewegung 70 ist bei dem in den Figuren 2 bis 5 dargestellten ersten Ausführungsbeispiel horizontal ausgerichtet und verläuft linear. Alternativ könnte eine schräg zur Horizontalen ausgerichtete Ausgleichsbewegung vorgesehen sein. Außerdem könnte die Ausgleichsbewegung nicht linear sein, beispielsweise könnte die Ausgleichsbewegung bogenförmig, insbesondere kreisbogenförmig verlaufen. Eine alternative Ausgleichsbewegung wird nachfolgend unter Bezugnahme auf die Figuren 6 bis 8 näher erläutert.

Die Ausgleichsbewegung 70 ist in einem Winkel zu einer Verbindungslinie 72 ausgerichtet, die in der in Figur 5 dargestellten angehobenen Stellung des Schlittens 46 die Drehachse 50 der Sägewelle 48 mit einer Drehachse 74 der Antriebswelle 58 verbindet. In der dargestellten Ausführungsform beträgt der Winkel zwischen der linearen Ausgleichsbewegung 70 der ersten Umlenkscheibe 60 und der Verbindungslinie 72 etwa 55°.

Die Lagerung der ersten Umlenkscheibe 66 am Transportwagen 36 erfolgt mittels einer Zugmittelspanneinrichtung, im dargestellten Ausführungsbeispiel mittels einer Riemenspanneinrichtung 76, die ein an der Transportplatte 40 unverschieblich gehaltenes Basisteil 78 und ein relativ zum Basisteil 78 in Richtung der Ausgleichsbewegung 70 linear verschiebbares Verstellteil 80 aufweist. Die erste Umlenkscheibe 66 ist am Verstellteil 80 frei drehbar gelagert und kann zusammen mit dem Verstellteil 80 in Richtung der Ausgleichsbewegung 70 bewegt werden. Das Basisteil 78 umfasst ein ortsfest an der Transportplatte 40 gehaltenes Führungsprofil 82 und das Verstellteil 80 bildet einen am Führungsprofil 82 linear verschiebbaren Führungsschuh 84, an dem ein Halteflansch 86 festgelegt ist. Am Halteflansch 86 ist eine parallel zum Führungsprofil 82 ausgerichtete Haltestange 88 gehalten, die eine erste Federstütze 90 trägt. Das Basisteil 78 weist eine zweite Federstütze 92 auf, und zwischen die beiden Federstützen 90, 92 ist ein Zugmittelspannelement in Form einer Druckfeder 94 eingespannt. Die Druckfeder 74 übt über die erste Federstütze 90, die Haltestange 88, den Halteflansch 86 und den Führungsschuh 84 auf die erste Umlenkscheibe 66 eine Federkraft aus, deren Stärke von der Stellung der ersten Umlenkscheibe 66 relativ zu der an der Transportplatte 40 ortsfest gehaltenen Federstütze 92 abhängig ist. Die Federkraft kann vom Benutzer eingestellt werden, indem er die erste Federstütze 90 zusammen mit der Haltestange 88 in einer gewünschten Position am Halteflansch 86 fixiert.

Wie aus den Figuren 2 bis 5 unmittelbar deutlich wird, sind die Antriebswelle 58 sowie die erste Umlenkscheibe 66 und die zweite Umlenkscheibe 68 in Bearbeitungsrichtung 22 des Transportwagens 36 versetzt zur Sägewelle 48 angeordnet. Bezogen auf die Vertikale nimmt die erste Umlenkscheibe 66 eine Position ein, die zwischen einer unteren Stellung der Sägewelle 48 und einer oberen Stellung der Sägewelle 48 angeordnet ist. Die untere Stellung der Sägewelle 48 ist durch die abgesenkte Stellung des Schlittens 46 vorgegeben und die obere Stellung der Sägewelle 48 ist durch die angehobene Stellung des Schlittens 46 vorgegeben.

Der Umschlingungswinkel des Antriebsriemens 56 um die erste Umlenkscheibe 66 ist kleiner als 180°. Im dargestellten Ausführungsbeispiel beträgt der Umschlingungswinkel des Antriebsriemens 56 um die erste Umlenkscheibe 66 in der abgesenkten Stellung des Schlittens 46 weniger als 135°, beispielsweise 100°, und in der angehobenen Stellung des Schlittens 46 beträgt der Umschlingungswinkel des Antriebsriemens 56 um die erste Umlenkscheibe 66 weniger als 90°, beispielsweise 65°.

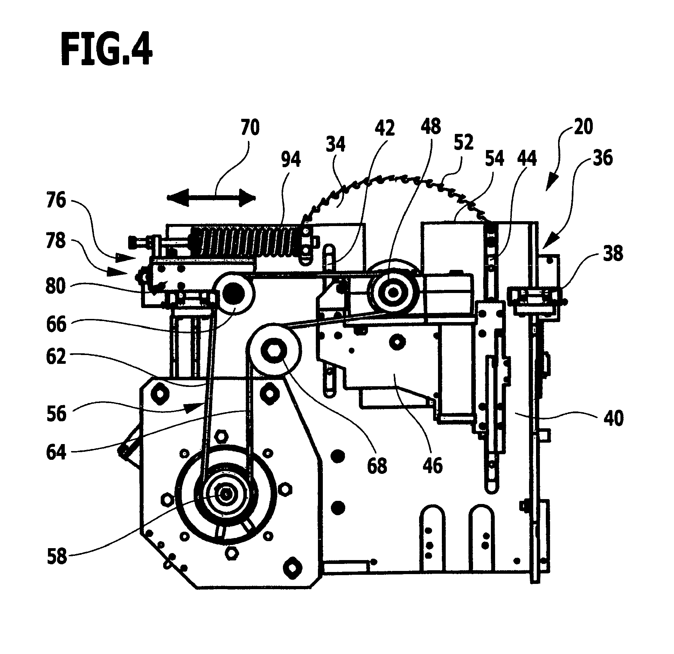

Die zweite Umlenkscheibe 68 ist an der Transportplatte 40 stationär gehalten. Das von der Antriebswelle 58 zur Sägewelle 48 führende zweite Trum 64 des Antriebsriemens 56 ist auf der der ersten Umlenkscheibe 66 zugewandten Seite der zweiten Umlenkscheibe 68 um die zweite Umlenkscheibe 68 herum geführt. Das die Antriebswelle 58 mit der Sägewelle 48 verbindende erste Trum 62 des Antriebsriemens 56 ist auf der der zweiten Umlenkscheibe 68 abgewandten Seite der ersten Umlenkscheibe 66 um die erste Umlenkscheibe 66 herum geführt. Wie aus den Figuren 3, 4 und 5 deutlich wird, führt die erste Umlenkscheibe 66 beim Anheben und Absenken des Schlittens 46 eine horizontale Ausgleichsbewegung durch, um die Zugspannung des Antriebsriemens 56 trotz der Änderung des Abstands zwischen der Antriebswelle 58 und der Sägewelle 48 konstant zu erhalten. Wird der Schlitten 46 ausgehend von seiner abgesenkten Stellung angehoben, so führt die erste Umlenkscheibe 66 zunächst eine Ausgleichsbewegung in die der Sägewelle 48 abgewandte Richtung aus, bis der Schlitten 46 eine in Figur 4 dargestellte Mittelstellung erreicht, in der die Sägewelle 48 in vertikaler Richtung auf gleicher Höhe wie die erste Umlenkscheibe 66 angeordnet ist. Bei der weiteren Bewegung des Schlittens 46 in die angehobene Stellung nähert sich die erste Umlenkrolle 66 wieder der Sägewelle 48 an. Dies wird durch Vergleich der Figuren 4 und 5 deutlich. Die reziprozierende Ausgleichsbewegung der ersten Umlenkscheibe 66 wird durch die Druckfeder 94 bewirkt, die einer Verringerung der vom Antriebsriemen auf die erste Umlenkscheibe 66 ausgeübten Zugkraft ebenso entgegenwirkt wie einer Erhöhung der Zugkraft bezogen auf einen vom Benutzer vorgebbaren Ausgangswert, der durch die Stellung der ersten Federstütze 90 relativ zur zweiten Federstütze 92 bestimmt ist.

In den Figuren 6, 7 und 8 ist eine zweite vorteilhafte Ausführungsform eines erfindungsgemäßen Sägeaggregats schematisch dargestellt, das insgesamt mit dem Bezugszeichen 100 belegt ist. Das Sägeaggregat 100 ist ähnlich ausgestaltet wie das voranstehend unter Bezugnahme auf die Figuren 2 bis 5 erläuterte Sägeaggregat 20. Für identische Bauteile werden daher in den Figuren 6 bis 8 dieselben Bezugszeichen verwendet wie in den Figuren 2 bis 5 und bezüglich dieser Bauteile wird zur Vermeidung von Wiederholungen auf die voranstehenden Erläuterungen Bezug genommen.

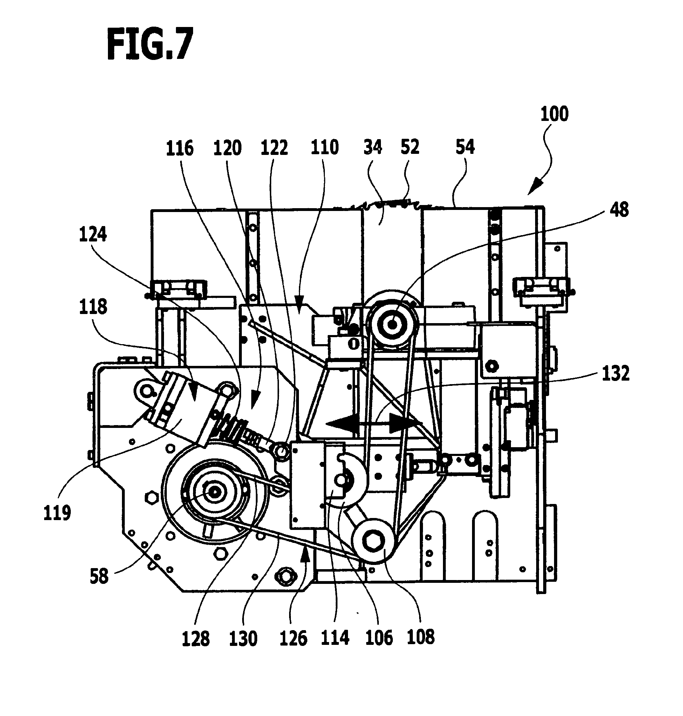

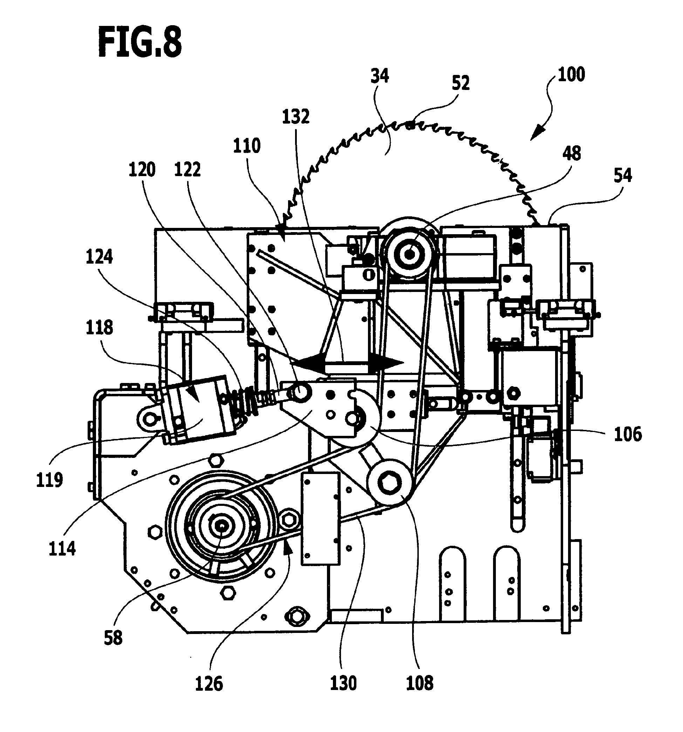

Im Unterschied zum Sägeaggregat 20 kommen beim Sägeaggregat 100 ein erstes Umlenkelement in Form einer ersten Umlenkscheibe 106 und ein zweites Umlenkelement in Form einer zweiten Umlenkscheibe 108 zum Einsatz, die an einem Schlitten 110 des Sägeaggregats 100 drehbar gelagert sind. In entsprechender Weise wie der Schlitten 46 des Sägeaggregats 20 ist auch der Schlitten 110 in vertikaler Richtung verschiebbar am Transportwagen 36 des Sägeaggregats 100 gelagert und kann mittels einer an sich bekannten und deshalb zur Erzielung einer besseren Übersicht in der Zeichnung nicht dargestellten Hubeinrichtung zwischen einer in Figur 7 dargestellten abgesenkten Stellung und einer in Figur 8 dargestellten angehobenen Stellung hin und her bewegt werden.

Über eine Riemenspanneinrichtung 116 ist die erste Umlenkscheibe 106 mit dem Transportwagen gekoppelt. Die Riemenspanneinrichtung 116 weist eine am Schlitten 110 festgelegte Führungseinrichtung auf in Form eines Führungsprofils, an dem ein Verstellteil in Form eines Führungsschuhs 114 in horizontaler Richtung linear verschiebbar gelagert ist. Am Führungsschuh 114 ist die erste Umlenkscheibe 106 frei drehbar gelagert.

Der Führungsschuh 114 ist mit einem verschwenkbar am Transportwagen 36 des Sägeaggregates 100 gelagerten Basisteil 118 gekoppelt. Das Basisteil 118 ist in Form eines Druckluftzylinders 119 ausgestaltet, der einen in der Zeichnung nicht dargestellten Kolben aufnimmt. Der Kolben ist über eine Kolbenstange 120 mit dem Führungsschuh 114 verbunden, wobei er im Druckluftzylinder 119 in Längsrichtung verschiebbar gelagert und mit seinem freien Ende 122 am Führungsschuh 114 gelenkig gehalten ist. Mittels des Druckluftzylinders 119 wird die Kolbenstange mit einer in Richtung auf den Führungsschuh 114 gerichteten Druckkraft beaufschlagt. Unter der Wirkung der Druckkraft wird die Kolbenstange 120 und über diese auch der Führungsschuh 114 gegen einen Antriebsriemen 126 des Sägeaggregates 100 gedrückt. Der Antriebsriemen 126 bildet in entsprechender Weise wie der voranstehend unter Bezugnahme auf die Figuren 2 bis 5 erläuterte Antriebsriemen 56 ein in sich geschlossenes Zugmittel aus, über das die Sägewelle 48 mit der ortsfest am Transportwagen 36 angeordneten Antriebswelle 58 des Sägeaggregates 100 gekoppelt ist.

Der Druckluftzylinder 119 wird in bekannter und deshalb in der Zeichnung nicht dargestellter Weise von einer Druckluftquelle kontrolliert mit Druckluft beaufschlagt. Für den Fall, dass die Druckluftversorgung störungsbedingt ausfällt, ist sicherheitshalber eine Druckfeder 124 vorgesehen, die sich einerseits am Druckluftzylinder 119 und andererseits an der Kolbenstange 120 abstützt und den Führungsschuh 114 über die Kolbenstange 120 mit einer Federkraft beaufschlagt.

Der Antriebsriemen 126 weist ein erstes Trum 128 und ein zweites Trum 130 auf. Ausgehend von der Antriebswelle 58 ist das erste Trum 128 auf der der zweiten Umlenkscheibe 108 zugewandten Unterseite der ersten Umlenkscheibe 106 um die erste Umlenkscheibe 106 herumgeführt, und das zweite Trum 130 ist ausgehend von der Antriebswelle 58 auf der der ersten Umlenkscheibe 106 abgewandten Unterseite der zweiten Umlenkscheibe 108 um die zweite Umlenkscheibe 108 herumgeführt. Aufgrund der beweglichen Lagerung der ersten Umlenkscheibe 106 am Schlitten 110 des Sägeaggregates 100 kann durch den Einsatz der von der Riemenspanneinrichtung 116 mit einer Druckkraft beaufschlagten ersten Umlenkscheibe 106 eine gleichbleibende Riemenspannung sichergestellt werden, wenn der Schlitten 110 in vertikaler Richtung bewegt wird. Bei einer Bewegung des Schlittens 110 ausgehend von seiner in Figur 7 dargestellten abgesenkten Stellung werden die erste Umlenkscheibe 106 und die zweite Umlenkscheibe 108 zusammen mit dem Schlitten 110 vertikal angehoben und gleichzeitig führt die erste Umlenkscheibe 106 aufgrund ihrer verschieblichen Lagerung am Führungsprofil 112 eine horizontale Ausgleichbewegung aus, die in den Figuren 7 und 8 mit dem Doppelpfeil 132 veranschaulicht ist. Bezogen auf die Sägewelle 48 ist die Ausgleichsbewegung 132 im Winkel zur Verbindungslinie 72 ausgerichtet, die in entsprechender Weise wie bei dem voranstehend unter Bezugnahme auf die Figuren 2 bis 5 dargestellten ersten Ausführungsbeispiel die Drehachse 50 der Sägewelle mit der Drehachse 74 der Antriebswelle 58 verbindet, wenn der Schlitten 110 seine angehobene Stellung einnimmt.

Wie bereits beim ersten Ausführungsbeispiel wird auch beim zweiten Ausführungsbeispiel durch den Einsatz einer Riemenspanneinrichtung eine gleichbleibende Riemenspannung erzielt. Die Riemenspanneinrichtung 116 weist hierzu den Druckluftzylinder 119 auf, der den Führungsschuh 114 mit einer Druckkraft beaufschlagt. Alternativ könnte der Führungsschuh 114 bei einer Bewegung des Schlittens 110 auch nur durch ein Federelement oder auch hydraulisch oder mit Hilfe eines Elektromotors mit einer Kraft beaufschlagt werden, die eine gleichbleibende Riemenspannung sicherstellt.

Die erfindungsgemäßen Sägeaggregate 20 und 100 zeichnen sich durch eine besonders kompakte Bauform aus, wobei sie eine verhältnismäßig geringe Bauhöhe aufweisen.

## Patentansprüche

1. Sägeaggregat für eine Sägemaschine (10) zum Aufteilen plattenförmiger Werkstücke, umfassend einen unterhalb eines Auflagetisches (14) der Sägemaschine (10) in einer Bearbeitungsrichtung (22) horizontal verfahrbaren Transportwagen (36), mindestens einen am Transportwagen (36) zwischen einer angehobenen und einer abgesenkten Stellung hin und her bewegbaren Schlitten (46; 110), an dem eine drehfest mit einem Sägeblatt (34) verbindbare Sägewelle (48) drehbar gelagert ist, sowie eine am Transportwagen (36) ortsfest angeordnete Antriebswelle (58), die von einem ortsfest am Transportwagen (36) gehaltenen Sägemotor (60) drehend antreibbar ist, wobei die Antriebswelle (58) über ein endloses Zugmittel (56; 126) mit der Sägewelle (58) gekoppelt ist und das Zugmittel (56; 126) über mindestens ein erstes Umlenkelement (66; 106) geführt ist zum Ausgleich einer durch Verstellung des Schlittens (46; 110) hervorgerufenen Änderung des Achsabstandes zwischen der Antriebswelle (58) und der Sägewelle (48), und wobei das erste Umlenkelement (66; 106) relativ zur Antriebswelle (58) und relativ zur Sägewelle (48) bewegbar ist, **dadurch gekennzeichnet, dass** die Bewegung des ersten Umlenkelements (66; 106) relativ zur Sägewelle (48) im Winkel zu einer in der angehobenen Stellung des Schlittens (46; 110) die Drehachse (74) der Antriebswelle (48) mit der Drehachse (50) der Sägewelle (48) verbindenden Verbindungslinie (72) ausgerichtet ist.

2. Sägeaggregat nach Anspruch 1, **dadurch gekennzeichnet, dass** das erste Umlenkelement (66; 106) linear bewegbar ist.

3. Sägeaggregat nach Anspruch 1 oder 2, **dadurch gekennzeichnet, dass** das erste Umlenkelement (66; 106) horizontal und/oder vertikal bewegbar ist.

4. Sägeaggregat nach einem der voranstehenden Ansprüche, **dadurch gekennzeichnet, dass** das erste Umlenkelement (66; 106) beim Übergang des Schlittens (46; 110) von seiner abgesenkten Stellung in seine angehobene Stellung reziprozierend bewegbar ist.

5. Sägeaggregat nach einem der voranstehenden Ansprüche, **dadurch gekennzeichnet, dass** das erste Umlenkelement (66; 106) in Abhängigkeit von einer vom Zugmittel (56; 126) auf das erste Umlenkelement (66; 106) ausgeübten Zugkraft bewegbar ist.

6. Sägeaggregat nach einem der voranstehenden Ansprüche, **dadurch gekennzeichnet, dass** das erste Umlenkelement (66; 106) in Abhängigkeit von der Position der Sägewelle (48) bewegbar ist.

7. Sägeaggregat nach einem der voranstehenden Ansprüche, **dadurch gekennzeichnet, dass** das Sägeaggregat (20; 100) eine Zugmittelspanneinrichtung (76; 116) aufweist mit einem Basisteil (78; 118) und einem relativ zum Basisteil (78; 118) bewegbaren Verstellteil (80; 114), wobei das erste Umlenkelement (66; 106) am Verstellteil (80; 114) drehbar gelagert ist und das Verstellteil (80; 114) bei einer Bewegung des Schlittens (46; 110) mit einer Stellkraft beaufschlagbar ist.

8. Sägeaggregat nach Anspruch 7, **dadurch gekennzeichnet, dass** die Zugmittelspanneinrichtung (76; 116) ein Federelement (94; 124) aufweist.

9. Sägeaggregat nach Anspruch 7 oder 8, **dadurch gekennzeichnet, dass** die Zugmittelspanneinrichtung (76; 116) elektromotorisch, pneumatisch oder hydraulisch steuerbar ist.

10. Sägeaggregat nach Anspruch 7, 8 oder 9, **dadurch gekennzeichnet, dass** das Basisteil (118) am Transportwagen (36) beweglich gelagert ist.

11. Sägeaggregat nach einem der Ansprüche 7 bis 10, **dadurch gekennzeichnet, dass** das Verstellteil (114) am Schlitten (110) beweglich gelagert ist.

12. Sägeaggregat nach einem der Ansprüche 7 bis 11, **dadurch gekennzeichnet, dass** die Größe der in einer vorgegebenen Position des Schlittens (46; 110) auf das Verstellteil (80; 114) einwirkenden Stellkraft vom Benutzer einstellbar ist.

13. Sägeaggregat nach einem der voranstehenden Ansprüche, **dadurch gekennzeichnet, dass** das Sägeaggregat (20; 100) ein ortsfest am Transportwagen (36) oder am Schlitten (46; 110) gelagertes zweites Umlenkelement (68; 108) aufweist.

14. Sägeaggregat nach Anspruch 13, **dadurch gekennzeichnet, dass** ausgehend von der Antriebswelle (58) ein erstes Trum (62; 128) des Zugmittels (56; 126) über oder unter das erste Umlenkelement (66; 106) und ein zweites Trum (64; 130) des Zugmittels (56; 126) über oder unter das zweite Umlenkelement (68) geführt ist.

15. Sägeaggregat nach Anspruch 14, **dadurch gekennzeichnet, dass** das erste Trum (62; 128) auf der dem zweiten Umlenkelement (68; 108) zugewandten oder abgewandten Seite des ersten Umlenkelements (66; 106) um das erste Umlenkelement (66; 106) geführt ist.

16. Sägeaggregat nach Anspruch 14 oder 15, **dadurch gekennzeichnet, dass** das zweite Trum (64; 130) auf der dem ersten Umlenkelement (66; 106) zugewandten oder abgewandten Seite des zweiten Umlenkelements (68; 108) um das zweite Umlenkelement (68; 108) geführt ist.

17. Sägeaggregat nach einem der voranstehenden Ansprüche, **dadurch gekennzeichnet, dass** der Umschlingungswinkel des Zugmittels (56; 126) um das erste Umlenkelement (66; 106) kleiner als 180° ist.
